# EUROPEAN PATENT APPLICATION

(11) **EP 1 964 643 A1**
(43) Date of publication of application: **03.09.2008**
(21) Application number: 08250116.4
(22) Date of filing: 10.01.2008
(51) Int. Cl.: B23Q 17/22, B27C 1/02

(54) **Systems and methods for measuring height of jointer infeed surface**

(30) Priority: 01.03.2007 US 713406
(71) Applicant: Grizzly Industrial, Inc., Bellingham, WA 98229 (US)
(72) Inventor: Balolia, Shiraz, c/o Grizzly Industrial, Inc., Bellingham Washington 98229 (US)
(74) Representative: Thomson, Neil David

(57) **Abstract**

A jointer system comprises a blade assembly (42), a base (40), an infeed table (32), and a measurement system (72). The base supports the blade assembly to define a reference plane. The infeed table defines an infeed plane. The measurement system comprises a stop member (70) rigidly connected to the base, a gauge assembly, and a display assembly. The stop member defines a stop surface defining a stop plane. The gauge assembly comprising a gauge supported relative to the infeed table and a pin member in contact with the stop surface. The gauge assembly generates a measurement signal indicative of displacement of the gauge relative to one of the infeed table and the pin member. The display assembly generates a display image based on the measurement signal, where the display image displays data indicative of displacement of the infeed plane relative to the reference plane.

## Description

### TECHNICAL FIELD

The present invention relates to jointer tables and, in particular, to systems and methods for measuring a height of a jointer table infeed surface relative to a reference plane.

### BACKGROUND OF THE INVENTION

A wooden board used in woodworking projects is typically a rectangular solid defining a pair of edge surfaces, a pair of face surfaces, and a pair of end surfaces. Ideally, the edge surfaces, face surfaces, and end surfaces of wooden boards used in woodworking projects are all completely flat, smooth, and parallel to each other.

However, the surface characteristics of raw boards used in woodworking typically vary based on numerous factors such as the type of wood, the growing conditions of the tree from which the board was obtained, the process of milling the board from the log, and changes in environment that affect the moisture content of the board after the milling process.

Accordingly, if the face surfaces of a raw board are not planar (e.g., cupped or bowed), the face surfaces are also milled such that they are substantially planar. In addition, before a typical raw board can be used in a woodworking product, the edge and end surfaces of the raw board are typically milled such that they are squared relative to the face surfaces thereof and smoothed for gluing and/or finishing.

The process of milling of a raw board to obtain a squared board thus typically involves milling of the face surfaces such that the face surfaces are substantially flat and parallel to each other and then milling of the edge surfaces such that they are smooth and perpendicular to the face surfaces.

Using modern woodworking machinery, the process off milling a raw board to obtain a squared board typically comprises the step of milling a first face surface flat using a jointer or planar, milling a second face surface flat and parallel to the first face surface using a planar, and milling the side edges smooth and square using the jointer. The end edges are typically cut to length using a cross-cut saw of some type (radial arm saw, table saw).

The present invention relates to jointers used during the process of milling a raw board to obtain a squared board. Jointers typically comprise a base supporting a blade assembly, an infeed table defining an infeed surface, and an outfeed table defining an outfeed surface. The infeed surface is substantially parallel to but not coplanar with the outfeed surface. The infeed table and outfeed table are supported by the base such that a cutting gap is defined between the infeed surface and outfeed surface. The base supports the blade assembly within the cutting gap. Typically, a jointer further comprises a fence that extends perpendicular to the infeed surface and the outfeed surface.

In use, a working surface on a board to be milled ("the workpiece") is placed on the infeed surface. The workpiece is then moved across the cutting gap such that the blade assembly removes a portion of the workpiece defining working surface. As the workpiece moves across the cutting gap, the workpiece is supported by the outfeed surface. The workpiece may be held against the fence as board is moved across the cutting gap.

One important factor in milling a workpiece using a jointer is the depth of the cut being made. The depth of cut is determined by a distance between an infeed plane defined by the infeed surface and a reference plane defined by the blade assembly. The reference plane is a plane that is parallel to the infeed plane and which is tangential to the uppermost part of a cutting cylinder defined by the cutting assembly. In general, the depth of cut should be maximized for a particular jointer and the characteristics a particular workpiece. The workpiece characteristics relevant to depth of cut include wood type, grain structure, moisture content, and dimensions of the working surface.

Most jointers therefore allow the depth of cut to be adjusted. The depth of cut is adjusted by moving the infeed table relative to the base. More specifically, the base supports a particular blade assembly such that the reference plane defined by the blade assembly is at a certain absolute location. The base supports the infeed table such that the infeed plane is parallel to the reference plane and the infeed plane may be moved up or down relative to the reference plane.

For a variety of reasons, however, the infeed table is not supported for simple up and down movement relative to the base. The term "simple movement" as used herein refers to the movement of the infeed table along a straight line path that is parallel to a vertical reference line that extends through the rotational axis of the cutter assembly. The terms "vertical" and "horizontal" as used herein are relative to the jointer, with the infeed plane and outfeed plane both being horizontal during normal use.

One problem with simple movement of the infeed table arises from the fact that a proximal edge of the infeed table defines a portion of the cutting gap. Simple movement of the infeed table causes the proximal edge to move laterally away from the blade assembly as the infeed table moves up relative to the base, thereby increasing the dimensions of the cutting gap. If the cutting gap becomes too large, the workpiece may not be milled properly to obtain a squared board. The proximal edge of the infeed table should thus be arranged as close as possible to the cutting assembly during milling to minimize the dimensions of the cutting gap.

The infeed table is thus typically supported for complex movement relative to the base. The term "complex movement" as used herein means that the infeed table moves such that that the proximal edge of the infeed table moves along a path that is not parallel to the vertical reference line.

In a first type of jointers that will be referred to herein as sliding dovetail jointers, complex movement is obtained by forming complimentary angled support surfaces on the infeed table and the base. The support surfaces are angled with respect to the vertical reference line such that the proximal edge of the infeed table moves along a linear path towards and away from the vertical reference line as the infeed table moves relative to the base.

In a second type of jointers commonly referred to as parallelogram table jointers, the infeed table is supported by two arms that are pivotably connected to the base and to the infeed table. The arms allow the proximal edge of the infeed table to be moved along a non-linear (e.g., arcuate) path. The path of the infeed table proximal edge causes the proximal edge of the infeed table to move towards and away from the vertical reference line as the infeed table moves relative to the base.

In any system that yields complex movement as defined herein, the determination of depth of cut can be problematic. Typically, depth of cut is measured by a scale system comprising a scale formed on the base and a pointer connected to the infeed table. The scale comprises a series of lines, and the distance between the lines generally corresponds to increments of depth of cut. However, because of the small distances being measured, the lines must be so small that the relationship between the pointer and the lines on the scale can be difficult to see. In addition, such scale systems are inherently inaccurate below an incremental distance of approximately 1/32".

In addition, the need often arises to replace one blade assembly with another blade assembly. Different blade assemblies defined cutting cylinders having different diameters. Accordingly, the reference plane may be at different vertical levels relative to the base. Accordingly, conventional scale systems for measuring depth of cut in which the scale is attached to the base cannot easily be recalibrated for different reference planes established by different blade assemblies.

It should be noted that the outfeed table of a conventional jointer is typically adjustable in substantially the same manner as an infeed table. The use of an adjustable outfeed table allows the position of the outfeed table to be set to accommodate blade assemblies defining different reference planes. Typically, the outfeed table is adjusted such that the outfeed plane is substantially coplanar with the reference plane as defined by a particular blade assembly.

The need thus exists for accurate and reliable systems and methods for determining depth of cut for jointers.

### SUMMARY OF THE INVENTION

The present invention may be embodied as a jointer system comprising a blade assembly, a base, an infeed table, and a measurement system. The base supports the blade assembly to define a reference plane. The infeed table defines an infeed plane. The measurement system comprises a stop member rigidly connected to the base, a gauge assembly, and a display assembly. The stop member defines a stop surface defining a stop plane. The gauge assembly comprising a gauge supported relative to the infeed table and a pin member in contact with the stop surface. The gauge assembly generates a measurement signal indicative of displacement of the gauge relative to one of the infeed table and the pin member. The display assembly generates a display image based on the measurement signal, where the display image displays data indicative of displacement of the infeed plane relative to the reference plane.

The present invention may also be embodied as a method of milling a workpiece comprising the following steps. A jointer comprising a base, an infeed table defining an infeed plane, and an outfeed table defining an outfeed plane is provided. A blade assembly is supported for rotation about a blade axis relative to the base. The blade assembly defines a cutting cylinder that defines a reference plane. The infeed table is moved between first and second positions relative to the base to adjust a depth of cut of the jointer. A stop member comprising a stop surface defining a stop plane is rigidly connected to the base. A gauge is supported relative to the infeed table. A pin member is supported relative to the gauge such that the pin member is in contact with the stop surface. The gauge member is allowed to move relative to one of the infeed table and the pin member as the infeed table moves relative to the base. A measurement signal indicative of displacement of the gauge relative to one of the infeed table and the pin member is generated. The measurement signal corresponds to displacement of the infeed plane relative to the reference plane. A display image is generated based on the measurement signal. The display image displays data indicative of displacement of the infeed plane relative to the reference plane.

### BRIEF DESCRIPTION OF THE DRAWINGS

FIG. 1 is a perspective view of an example jointer employing a first example depth of cut measuring system of the present invention;
FIG. 2 is a rear elevation view of a portion of the jointer of FIG. 1 illustrating the major components of the first example depth of cut measuring system;
FIG. 3 is a rear elevation view illustrating the first example depth of cut measuring system in a first configuration;
FIG. 4 is a rear elevation view illustrating the first example depth of cut measuring system in a second configuration;
FIG. 5 is a side elevation view of a portion of the jointer of FIG. 1 illustrating the major components of the depth of cut measuring system of the present invention;
FIG. 6 is a front elevation view of a display portion of the depth of cut measuring system of the present invention;
FIG. 7 is a rear elevation view illustrating a second example depth of cut measuring system in a first configuration; and
FIG. 8 is a rear elevation view illustrating the second example depth of cut measuring system in a second configuration.

### DETAILED DESCRIPTION OF THE INVENTION

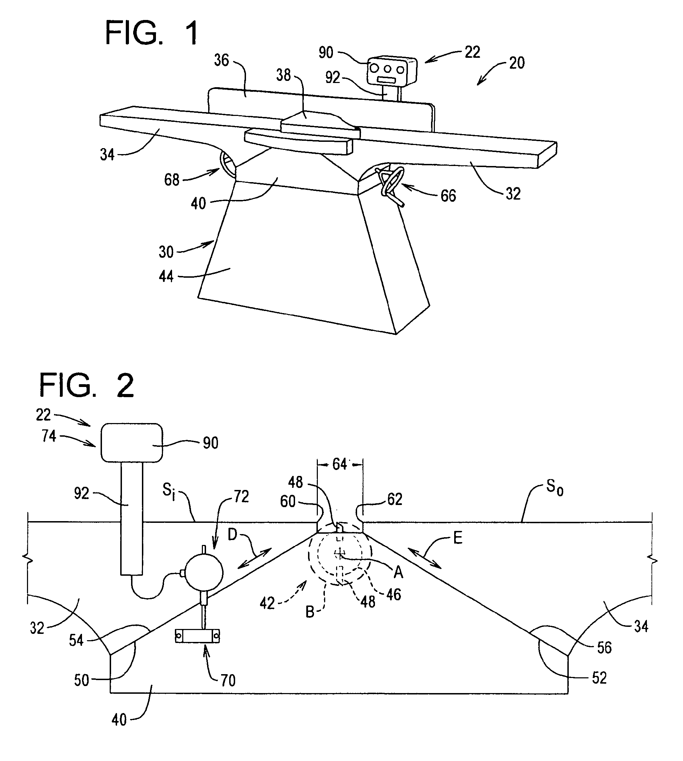

Referring initially to FIG. 1 of the drawing, depicted therein is an example jointer system 20 that may be used in combination with a first example depth of cut measuring system 22 constructed in accordance with, and embodying, the principle of the present invention. The jointer 20 is not per se part of the present invention, and will be described herein only to the extent necessary for a complete understanding of the first example depth of cut measuring system 22.

The example jointer 20 is a sliding dovetail style jointer, and the principles of the present invention will be described herein in the context of the example jointer 20. However, the example depth of cut measuring system 22 may be applied to other types of jointer systems such as a parallelogram table jointer.

The example dovetail style jointer 20 comprises a base assembly 30, an infeed table 32, an outfeed table 34, a fence 36, and a safety cover 38. The base assembly 30 comprises a base structure 40, a blade assembly 42, and a stand structure 44. The blade assembly 42 comprises a hub member 46 and one or more blade members 48 extending from the hub member 46.

The hub member 46 rotates about a blade axis A that is fixed relative to the base structure 40. As the hub member 46 rotates, the blade members 48 define a cutting cylinder B centered about the blade axis A. The cutting cylinder B in turn defines a reference plane C. The reference plane C is horizontal and tangential to the cutting cylinder B at the uppermost point thereof.

The infeed table 32 defines an infeed surface Sᵢ and a first table support surface 50. The outfeed table 34 defines an outfeed surface Sₒ and a second table support surface 52. The base structure 40 defines first and second base support surfaces 54 and 56 The first base support surface 54 engages the first table support surface 50 to support the infeed table 32 for movement as shown by arrow D relative to the base structure 40. The second base support surface 56 engages the second table support surface 52 to support the outfeed table 34 for movement relative as shown by arrow E relative to the base structure 40.

The infeed table 32 defines an infeed proximal edge 60, and the outfeed table defines an outfeed proximal edge 62. The proximal edges 60 and 62 define a cutting gap 64. The blade assembly 42 is arranged such that the blades move at least partly within the cutting gap 64.

The base assembly 30 further comprises first and second handwheel assemblies 66 and 68. The handwheel assemblies 66 and 68 are conventionally configured to allow the user to displace the infeed and outfeed tables 32 and 34 in the directions shown by arrows D and E, respectively, relative to the base structure 40.

The infeed surface Sᵢ defines an infeed plane F, while the outfeed surface Sₒ defines an outfeed plane G. Conventionally, the reference plane C, infeed plane F, and outfeed plane G are substantially horizontal and parallel with each other. The outfeed table 34 is ideally adjusted such that the outfeed plane G is substantially coplanar with the reference plane C. An offset distance H between the infeed plane F and the reference plane C defines the depth of cut of the jointer 20.

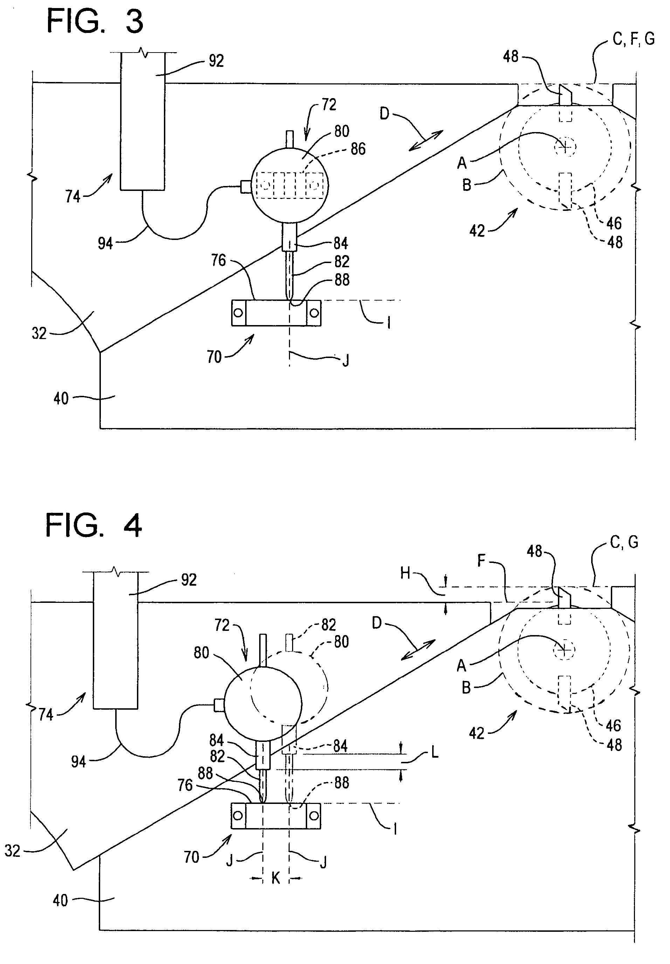

As perhaps best shown in FIG. 2, the depth of cut measurement system 22 comprises a stop member 70, a gauge assembly 72, and a display assembly 74. The stop member 70 defines a substantially planar stop surface 76 that in turn defines a stop plane I. As shown in FIGS. 3 and 4, the stop member 70 is rigidly connected to the base structure 40 such that the stop plane I is substantially horizontal.

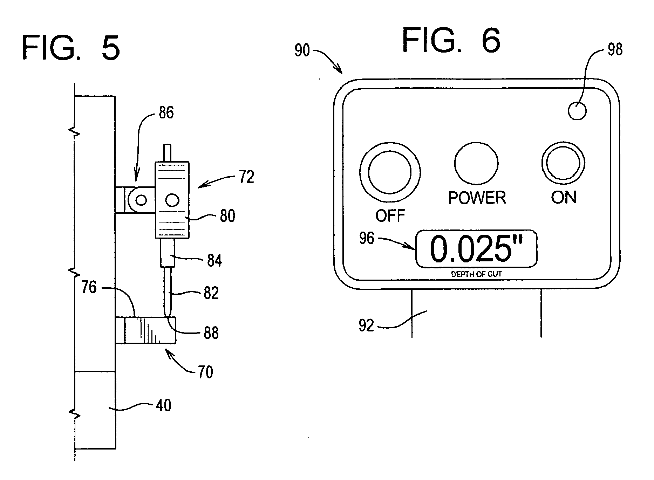

The gauge assembly 72 comprises a gauge 80, a pin member 82, a pin support sleeve 84, and a mounting assembly 86 (FIG. 6). The gauge 80 supports the pin support sleeve 84, and the pin support sleeve 84 supports the pin member 82 for movement along a pin longitudinal axis J relative to the gauge 80. The mounting assembly 86 rigidly connects the gauge 80 to the infeed table 32. The example pin member 82 is an elongate cylindrical member but may take other forms depending upon a particular implementation of the principles of the present invention.

The locations of the gauge 80 relative to the infeed table 32 and the stop member 70 relative to the base member 40 are selected such that a tip 88 of the pin member 82 remains in contact with the stop surface 76 as the infeed table 32 is moved relative to the base member 40 to set the depth of cut.

In particular, as shown in FIGS. 3 and 4, the infeed table 32 moves between a first position (FIG. 3) and a second position (FIG. 4). The first and second positions define a range of movement of the infeed table 32 relative to the base structure 40. When the infeed table 32 is in the first position, the infeed plane F is at least coplanar with the reference plane C and may be above the reference plane C. When the infeed table 32 is in the second position, the infeed plane F is below the reference plane C by the offset distance H. The infeed table 32 will typically be arranged somewhere between the first and second positions based on the desired depth of cut.

As the infeed table 32 moves between the first and second positions, the gauge 80 moves in the direction D with the infeed table 32, and the pin member 82 is displaced laterally a pin displacement distance K as shown in FIG. 4. However, because the pin member 82 moves relative to the gauge 80, the gauge 80 moves a gauge distance L relative to the pin member 82. The gauge distance L is equal to the offset distance H.

The gauge assembly 72 generates a depth of cut measurement signal based on displacement of the gauge 80 relative to the pin member 82. The depth of cut signal is a digital or analog signal corresponding to the gauge distance L.

The display assembly 74 comprises a control panel 90 (FIG. 6), a support member 92, and a cable 94 that carries the depth of cut signal from the gauge assembly 72 to the control panel 90. As perhaps best shown in FIG. 1, the support member 92 supports the control panel 90 for view by the operator of the jointer 20. The control panel 90 comprises a display device 96 that generates, based on the depth of cut signal, an image representing the depth of cut. The example image displayed by the display device 96 comprises alphanumeric characters representing the depth of cut in thousandths of an inch (0.025"), but other displays (e.g. dial) and measurement systems (e.g., metric) may be used.

As described above, the reference plane C is determined by the dimensions of each particular blade assembly 42. To calibrate the measurement system 22, the infeed table 32 is moved until the infeed plane F is parallel to the reference plane C. At this point, a calibrate button 98 on the control panel 90 may be pressed to zero the output of the display device 96. The output of the display device 96 device thus corresponds to distance indicated by the depth of cut signal from the location of the pin member 82 on the stop surface 76 at the time the calibrate button 98 is activated.

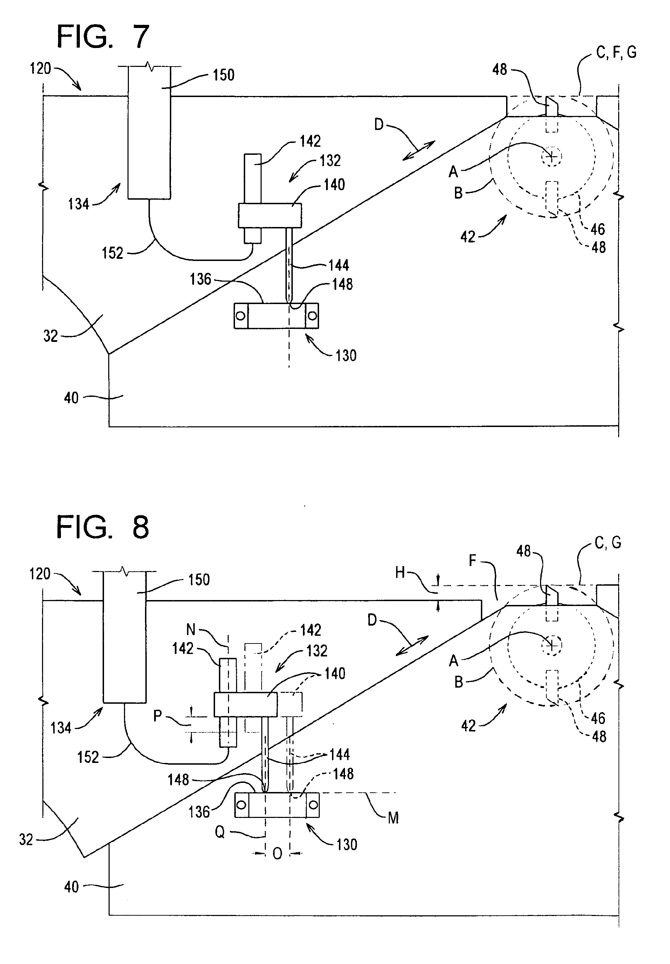

Referring now to FIGS. 7 and 8 of the drawing, depicted therein is another example depth of cut measurement system 120 constructed in accordance with, and embodying, the principles of the present invention. The measurement system 120 is also adapted to be used with either a dovetail table jointer such as the example jointer 20 as shown or with other types of jointers such as parallelogram jointers.

As shown in FIGS. 7 and 8, the depth of cut measurement system 120 comprises a stop member 130, a gauge assembly 132, and a display assembly 134. The stop member 130 defines a substantially planar stop surface 136 that in turn defines a stop plane M. As shown in FIGS. 7 and 8, the stop member 130 is rigidly connected to the base structure 40 such that the stop plane M is substantially horizontal.

The gauge assembly 132 comprises a gauge 140, a rail 142, a pin member 144, and a mounting assembly (not shown in FIGS. 7 and 8). The mounting assembly rigidly connects the rail 142 to the infeed table 32. The rail 142 in turn supports the gauge 140 for movement along a fixed axis N relative to the infeed table 32. The pin member 144 is rigidly connected to the gauge 140.

The locations of the rail 142 relative to the infeed table 32 and the stop member 130 relative to the base member 40 are selected such that a tip 148 of the pin member 144 remains in contact with the stop surface 136 as the infeed table 32 is moved relative to the base member 40 to set the depth of cut.

In particular, as shown in FIGS. 7 and 8, the infeed table 32 moves between a first position (FIG. 7) and a second position (FIG. 8). The first and second positions define a range of movement of the infeed table 32 relative to the base structure 40. When the infeed table 32 is in the first position, the infeed plane F is at least coplanar with the reference plane C and may be above the reference plane C. When the infeed table 32 is in the second position, the infeed plane F is below the reference plane C by the offset distance H. The infeed table 32 will typically be arranged somewhere between the first and second positions based on the desired depth of cut.

As the infeed table 32 moves between the first and second positions, the gauge 140 moves in the direction D with the infeed table 32. The pin member 144 is displaced laterally a pin displacement distance O as shown in FIG. 8. In addition, the gauge 140 moves a gauge distance P along a longitudinal axis Q of the rail 142 relative to the rail member 142. The gauge distance P is equal to the offset distance H.

The gauge assembly 132 generates a depth of cut signal based on displacement of the gauge 140 relative to the rail member 142. The depth of cut signal is a digital or analog signal corresponding to the gauge distance P. The gauge 140 and rail member 142 may take the form of what is commonly referred to as a glass scale. A glass scale is a precision instrument for measuring relative displacement between the gauge 140 and the rail member 142.

As with the display assembly 74 described above, the display assembly 134 comprises a control panel (not shown), a support member 150, and a cable 152 that carries the depth of cut signal from the gauge assembly 132 to the control panel. The support member 150 supports the control panel so that the user may see a display image representing the depth of cut, where the display image is generated based on the depth of cut signal.

As described above, the reference plane C is determined by the dimensions of each particular blade assembly 42. To calibrate the measurement system 120, the infeed table 32 is moved until the infeed plane F is parallel to the reference plane C. At this point, a calibrate button (not shown) on the control panel may be pressed to zero the output of the display device. The output of the display device thus corresponds to the distance indicated by the depth of cut signal from the location of the pin member 144 on the stop surface 136 at the time the calibrate button is activated. Alternatively, an effective length of the pin member 144 may be shortened or lengthened such that the display image is zero when the infeed plane F is parallel to the reference plane C.

Given the foregoing, it should be apparent that the present invention may be embodied in forms other than those described above. The scope of the present invention should thus be determined based on the claims appended hereto and not the foregoing detailed description of the invention.

## Claims

1. A jointer system comprising:
a blade assembly;
a base for supporting the blade assembly for rotation about a blade axis, where the blade assembly defines a cutting cylinder that defines a reference plane;
an infeed table movably supported by the base, where the infeed table defines an infeed surface that in turn defines an infeed plane;
a measurement system comprising
a stop member rigidly connected to the base, where the stop member defines a stop surface defining a stop plane, and
a gauge assembly comprising
a gauge supported relative to the infeed table, and
a pin member supported by the gauge such that the pin member is in contact with the stop surface, and
a display assembly; whereby
as the infeed table moves relative to the base, the gauge moves relative to one of the infeed table and the pin member; and
the gauge assembly generates a measurement signal indicative of displacement of the gauge relative to one of the infeed table and the pin member, where the measurement signal corresponds to displacement of the infeed plane relative to the reference plane; and
the display assembly generates a display image based on the measurement signal, where the display image displays data indicative of displacement of the infeed plane relative to the reference plane.

2. A jointer system as recited in claim 1, in which:
the gauge is rigidly connected to the infeed table;
the pin member is movably supported by the gauge; and
the gauge assembly generates the measurement signal to indicate movement of the gauge relative to the pin member.

3. A jointer system as recited in claim 2, in which the gauge supports the pin member for movement relative to the gauge along a longitudinal axis of the pin member.

4. A jointer system as recited in claim 2, further comprising a mounting assembly for rigidly connecting the gauge to the infeed table.

5. A jointer system as recited in claim 1, in which:
the gauge is rigidly connected to the pin member;
the gauge is movably supported by the infeed table; and
the gauge assembly generates the measurement signal to indicate movement of the gauge relative to the infeed table.

6. A jointer system as recited in claim 5, further comprising a rail rigidly connected to the infeed table, where the rail supports the gauge for movement relative to the infeed table along a longitudinal axis of the rail.

7. A jointer system as recited in claim 1, in which the infeed plane is substantially parallel to the reference plane.

8. A jointer system as recited in claim 1, in which the stop surface defines a stop plane, where the stop plane is substantially parallel to the infeed plane.

9. A jointer system as recited in claim 7, in which the stop surface defines a stop plane, where the stop plane is substantially parallel to the infeed plane.

10. A jointer system as recited in claim 1, in which the display assembly comprises:
a display device for generating the display image based on the measurement signal; and
a cable for carrying the measurement signal from the gauge assembly to the display device.

11. A jointer system as recited in claim 10, in which the display assembly further comprises a support member for supporting the display device such that the display image is visible to a user during normal operation of the jointer system.

12. A method of milling a workpiece comprising the steps of:
providing a jointer comprising a base, an infeed table defining an infeed plane, and an outfeed table defining an outfeed plane; supporting a blade assembly for rotation about a blade axis relative to the base, where the blade assembly defines a cutting cylinder that defines a reference plane;
moving the infeed table between first and second positions relative to the base to adjust a depth of cut of the jointer; rigidly connecting to the base a stop member comprising a stop surface defining a stop plane;
supporting a gauge relative to the infeed table;
supporting a pin member relative to the gauge such that the pin member is in contact with the stop surface;
allowing the gauge member to move relative to one of the infeed table and the pin member as the infeed table moves relative to the base; and
generating a measurement signal indicative of displacement of the gauge relative to one of the infeed table and the pin member, where the measurement signal corresponds to displacement of the infeed plane relative to the reference plane; and
generating a display image based on the measurement signal, where the display image displays data indicative of displacement of the infeed plane relative to the reference plane.

13. A method as recited in claim 12, further comprising the step of calibrating the gauge member by:
arranging the infeed table such that the infeed plane is parallel to the reference plane; and
adjusting the measurement signal such that the display image indicates no displacement of the infeed plane relative to the reference plane when the infeed plane is parallel to the reference plane.

14. A method as recited in claim 13, further comprising the steps of:
rigidly connecting the gauge to the infeed table;
movably supporting the pin member relative to the gauge; and
generating the measurement signal to indicate movement of the gauge relative to the pin member.

15. A method as recited in claim 14, further comprising the step of supporting the pin member for movement relative to the gauge along a longitudinal axis of the pin member.

16. A method as recited in claim 13, further comprising the steps of:
rigidly connecting the gauge to the pin member;
movably supporting the gauge relative to the infeed table; and
generating the measurement signal to indicate movement of the gauge relative to the infeed table.

17. A method as recited in claim 16, further comprising the step of rigidly connecting a rail rigidly to the infeed table such that the rail supports the gauge for movement relative to the infeed table along a longitudinal axis of the rail.

18. A method as recited in claim 13, in which the step of generating the display image further comprises the steps of:
providing a display device for generating the display image based on the measurement signal; and
providing a cable for carrying the measurement signal from the gauge assembly to the display device.

19. A measurement system for a jointer system comprising a base, an infeed table defining an infeed plane, an outfeed table, and a blade assembly supported by the base such that rotation of the blade assembly defines a reference plane:
a stop member rigidly connected to one of the infeed table and the base, where the stop member defines a stop surface, and
a gauge assembly comprising
a gauge supported relative to the other of the infeed table and the base, and
a pin member supported by the gauge such that the pin member is in contact with the stop surface, and
a display assembly; whereby
as the infeed table moves relative to the base, the gauge assembly generates a measurement signal indicative of displacement of the gauge relative to one of the base, the infeed table, and the pin member, where the measurement signal corresponds to displacement of the infeed plane relative to the reference plane; and
the display assembly generates a display image based on the measurement signal, where the display image displays data indicative of displacement of the infeed plane relative to the reference plane.
